# EUROPEAN PATENT APPLICATION

(11) **EP 3 336 790 A1**
(43) Date of publication of application: **20.06.2018**
(21) Application number: 15902606.1
(22) Date of filing: 01.09.2015
(51) Int. Cl.: G06Q 20/40, G06Q 20/32

(54) **PAYMENT AUTHENTICATION METHOD AND DEVICE FOR MOBILE TERMINAL, AND MOBILE TERMINAL**

(71) Applicant: Huawei Technologies Co., Ltd., Longgang District Shenzhen, Guangdong 518129 (CN)
(72) Inventor: YUAN, Feifan, Shenzhen Guangdong 518129 (CN)
(74) Representative: Epping - Hermann - Fischer
(86) International application number: PCT/CN2015/088805
(87) International publication number: WO 2017/035799

(57) **Abstract**

The present invention discloses a payment authentication method and apparatus for a mobile terminal, and a mobile terminal. The method includes: obtaining, by a mobile terminal, first biometric feature information entered by a user; comparing, by the mobile terminal, the first biometric feature information with second biometric feature information, where the second biometric feature information is prestored biometric feature information used for user identity authentication; comparing, by the mobile terminal, the first biometric feature information with third biometric feature information if the first biometric feature information matches the second biometric feature information, where the third biometric feature information is prestored biometric feature information used for payment authentication; and determining, by the mobile terminal, that payment authentication is complete when the first biometric feature information matches the third biometric feature information. Security of the payment authentication can be improved in the present invention.

## Description

### TECHNICAL FIELD

The present invention relates to the field of electronic technologies, and in particular, to a payment authentication method and apparatus for a mobile terminal, and a mobile terminal.

### BACKGROUND

With popularity of a mobile terminal, use of mobile payment becomes more frequent. The mobile payment in the prior art includes online payment and offline payment. The online payment is mainly used for online shopping on a shopping platform, and for the offline payment, communication between a mobile terminal and a scanning device is used to implement mobile payment.

Currently, the offline payment includes two-dimensional barcode payment, card swiping payment performed on a point of sale (POS, Point of Sale) by simulating the mobile terminal as a bankcard by using a built-in near field communication (NFC, Near Field Communication) module of the mobile terminal, or the like. For the two-dimensional barcode payment, the mobile terminal generates a two-dimensional barcode related to payment, and completes the payment after the scanning device scans the two-dimensional barcode. However, for the two-dimensional barcode payment, a scanning device that can identify the two-dimensional barcode needs to be equipped for a merchant to complete the payment. Therefore, there is a specific limitation on an area coverage rate of the two-dimensional barcode payment.

The card swiping payment performed on a POS by simulating a mobile terminal as a bankcard by using a built-in NFC apparatus of the mobile terminal includes two payment manners. In one manner, related data of the bankcard is directly stored in the mobile terminal, when the mobile terminal performs payment on the POS by using the built-in NFC apparatus, the payment may be implemented without needing to enter authentication data on the mobile terminal, and payment security is relatively weak. In the other manner, related data of the bankcard and authentication data are stored in a server, and when the mobile terminal interacts with the POS, the mobile terminal obtains the authentication data from the server by using a network, and then uses the authentication data to implement mobile payment. Therefore, in this scheme, the network needs to be used to implement a function of the mobile payment. However, in a process in which the mobile terminal obtains the authentication data by using the network, the authentication data is likely to be stolen, and payment security also needs to be improved.

### SUMMARY

The present invention provides a payment authentication method and apparatus for a mobile terminal, and a mobile terminal, so that security of payment authentication can be improved.

To resolve the foregoing technical problem, a first aspect of the present invention provides a payment authentication method for a mobile terminal, including:
obtaining, by a mobile terminal, first biometric feature information entered by a user;
comparing, by the mobile terminal, the first biometric feature information with second biometric feature information, where the second biometric feature information is prestored biometric feature information used for user identity authentication;
comparing, by the mobile terminal, the first biometric feature information with third biometric feature information if the first biometric feature information matches the second biometric feature information, where the third biometric feature information is prestored biometric feature information used for payment authentication; and
determining, by the mobile terminal, that payment authentication is complete when the first biometric feature information matches the third biometric feature information.

With reference to an implementation manner of the first aspect, in a first possible implementation manner of the first aspect, the comparing, by the mobile terminal, the first biometric feature information with second biometric feature information includes:
comparing, by the mobile terminal, the first biometric feature information with the second biometric feature information in a first execution environment; and
the comparing, by the mobile terminal, the first biometric feature information with third biometric feature information includes:
   comparing, by the mobile terminal, the first biometric feature information with the third biometric feature information in a second execution environment, where a security level of the second execution environment is higher than a security level of the first execution environment.

With reference to an implementation manner of the first aspect, in a second possible implementation manner of the first aspect, after the comparing, by the mobile terminal, the first biometric feature information with second biometric feature information, the method further includes:
obtaining, by the mobile terminal, fourth biometric feature information entered by the user, if the first biometric feature information matches the second biometric feature information;
the comparing, by the mobile terminal, the first biometric feature information with third biometric feature information includes:
   comparing, by the mobile terminal, the fourth biometric feature information with the third biometric feature information; and
   the determining, by the mobile terminal, that payment authentication is complete when the first biometric feature information matches the third biometric feature information includes:
      determining, by the mobile terminal, that the payment authentication is complete when the fourth biometric feature information matches the third biometric feature information.

With reference to the second possible implementation manner of the first aspect, in a third possible implementation manner of the first aspect, the comparing, by the mobile terminal, the first biometric feature information with second biometric feature information includes:
comparing, by the mobile terminal, the first biometric feature information with the second biometric feature information in a third execution environment; and
the comparing, by the mobile terminal, the fourth biometric feature information with the third biometric feature information includes:
   comparing, by the mobile terminal, the fourth biometric feature information with the third biometric feature information in a fourth execution environment, where a security level of the fourth execution environment is higher than a security level of the third execution environment.

With reference to any one of the first aspect to the third possible implementation manner of the first aspect, in a fourth possible implementation manner of the first aspect, before the obtaining, by a mobile terminal, first biometric feature information entered by a user, the method further includes:
obtaining, by the mobile terminal, a first payment request entered by the user; and
after the determining, by the mobile terminal, that payment authentication is complete, the method further includes:
   responding, by the mobile terminal, to the first payment request to perform payment.

With reference to any one of the first aspect to the third possible implementation manner of the first aspect, in a fifth possible implementation manner of the first aspect, after the determining, by the mobile terminal, that payment authentication is complete, the method further includes:
generating, by the mobile terminal, a second payment request, where the second payment request is used to request a payment device of the mobile terminal to perform payment;
encrypting, by the mobile terminal, the second payment request by using a preset key; and
requesting, by the mobile terminal, the payment device to perform a payment operation after requesting a secure element of the mobile terminal to complete decryption of the second payment request by using the preset key.

With reference to either the fourth possible implementation manner of the first aspect or the fifth possible implementation manner of the first aspect, in a sixth possible implementation manner of the first aspect, the mobile terminal completes the payment operation by using a near field communication NFC apparatus.

A second aspect of the present invention provides a payment authentication apparatus, including:
a first obtaining module, configured to obtain first biometric feature information entered by a user;
a first comparison module, configured to compare the first biometric feature information with second biometric feature information, where the second biometric feature information is prestored biometric feature information used for user identity authentication;
a second comparison module, configured to compare the first biometric feature information with third biometric feature information if a comparison result of the first comparison module is that the first biometric feature information matches the second biometric feature information, where the third biometric feature information is prestored biometric feature information used for payment authentication; and
a payment authentication module, configured to determine that payment authentication is complete when a comparison result of the second comparison module is that the first biometric feature information matches the third biometric feature information.

With reference to an implementation manner of the second aspect, in a first possible implementation manner of the second aspect, the first comparison module is specifically configured to:
compare the first biometric feature information with the second biometric feature information in a first execution environment; and
the second comparison module is specifically configured to:
   compare the first biometric feature information with the third biometric feature information in a second execution environment, where a security level of the second execution environment is higher than a security level of the first execution environment.

With reference to an implementation manner of the second aspect, in a second possible implementation manner of the second aspect, the payment authentication apparatus further includes:
a second obtaining module, configured to obtain fourth biometric feature information entered by the user, if the comparison result of the first comparison module is that the first biometric feature information matches the second biometric feature information;
the second comparison module is specifically configured to:
   compare the fourth biometric feature information with the third biometric feature information; and
   the payment authentication module is specifically configured to:
      determine that the payment authentication is complete when the fourth biometric feature information matches the third biometric feature information.

With reference to the second possible implementation manner of the second aspect, in a third possible implementation manner of the second aspect, the first comparison module is specifically configured to:
compare the first biometric feature information with the second biometric feature information in a third execution environment; and
the second comparison module is specifically configured to:
   compare the fourth biometric feature information with the third biometric feature information in a fourth execution environment, where a security level of the fourth execution environment is higher than a security level of the third execution environment.

With reference to any one of the second aspect to the third possible implementation manner of the second aspect, in a fourth possible implementation manner of the second aspect, the payment authentication apparatus further includes:
a third obtaining module, configured to obtain a first payment request entered by the user; and
a payment module, configured to respond to the first payment request to perform payment.

With reference to any one of the second aspect to the third possible implementation manner of the second aspect, in a fifth possible implementation manner of the second aspect, the payment authentication apparatus further includes:
a generation module, configured to generate a second payment request, where the second payment request is used to request a payment device of the payment authentication apparatus to perform payment;
an encryption module, configured to encrypt the second payment request by using a preset key; and
a request module, configured to request the payment device to perform a payment operation after requesting a secure element of the payment authentication apparatus to complete decryption of the second payment request by using the preset key.

With reference to either the fourth possible implementation manner of the second aspect or the fifth possible implementation manner of the second aspect, in a sixth possible implementation manner of the second aspect, the payment authentication apparatus completes the payment operation by using a near field communication NFC apparatus.

A third aspect of the present invention provides a mobile terminal, and the mobile terminal includes a communications bus, an input device, and a processor;
the input device is configured to obtain first biometric feature information entered by a user; and
the processor is configured to: compare the first biometric feature information with second biometric feature information, compare the first biometric feature information with third biometric feature information if the first biometric feature information matches the second biometric feature information, and determine that payment authentication is complete when the first biometric feature information matches the third biometric feature information, where the second biometric feature information is prestored biometric feature information used for user identity authentication, and the third biometric feature information is prestored biometric feature information used for payment authentication.

With reference to an implementation manner of the third aspect, in a first possible implementation manner of the third aspect, that the processor compares the first biometric feature information with second biometric feature information specifically performs the following step:
comparing the first biometric feature information with the second biometric feature information in a first execution environment; and
that the processor compares the first biometric feature information with third biometric feature information specifically performs the following step:
   comparing the first biometric feature information with the third biometric feature information in a second execution environment, where a security level of the second execution environment is higher than a security level of the first execution environment.

With reference to an implementation manner of the third aspect, in a second possible implementation manner of the third aspect, the input device is further configured to obtain fourth biometric feature information entered by the user, if the first biometric feature information matches the second biometric feature information;
that the processor compares the first biometric feature information with third biometric feature information specifically performs the following step:
comparing the fourth biometric feature information with the third biometric feature information; and
that the processor determines that payment authentication is complete when the first biometric feature information matches the third biometric feature information specifically performs the following step:
   determining that the payment authentication is complete when the fourth biometric feature information matches the third biometric feature information.

With reference to the second possible implementation manner of the third aspect, in a third possible implementation manner of the third aspect, that the processor compares the first biometric feature information with second biometric feature information specifically performs the following step:
comparing the first biometric feature information with the second biometric feature information in a third execution environment; and
that the processor compares the fourth biometric feature information with the third biometric feature information specifically performs the following step:
   comparing the fourth biometric feature information with the third biometric feature information in a fourth execution environment, where a security level of the fourth execution environment is higher than a security level of the third execution environment.

With reference to any one of the third aspect to the third possible implementation manner of the third aspect, in a fourth possible implementation manner of the third aspect, the input device is further configured to obtain a first payment request entered by the user; and
the mobile terminal further includes a payment device, and the payment device is configured to: after the processor determines that the payment authentication is complete, respond to the first payment request to perform payment.

With reference to any one of the third aspect to the third possible implementation manner of the third aspect, in a fifth possible implementation manner of the third aspect, the mobile terminal further includes a secure element and a payment device, and the processor is further configured to:
generate a second payment request after determining that the payment authentication is complete, where the second payment request is used to request the payment device to perform payment; and
encrypt the second payment request by using a preset key;
the secure element is configured to complete decryption of the second payment request by using the preset key; and
the payment device is configured to perform a payment operation after the secure element completes the decryption of the second payment request.

With reference to either the fourth possible implementation manner of the third aspect or the fifth possible implementation manner of the third aspect, in a sixth possible implementation manner of the third aspect, the payment device is a near field communication NFC apparatus.

In the present invention, a mobile terminal obtains first biometric feature information entered by a user; the mobile terminal compares the first biometric feature information with second biometric feature information, where the second biometric feature information is prestored biometric feature information used for user identity authentication; the mobile terminal compares the first biometric feature information with third biometric feature information if the first biometric feature information matches the second biometric feature information, where the third biometric feature information is prestored biometric feature information used for payment authentication; and the mobile terminal determines that payment authentication is complete when the first biometric feature information matches the third biometric feature information. The obtained first biometric feature information may be directly used to perform user identify authentication before payment, and after the authentication succeeds, it is determined, by comparison with the third biometric feature information used for payment authentication, that the obtained first biometric feature information passes the payment authentication. Therefore, security of the payment authentication is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of an embodiment of a payment authentication method for a mobile terminal according to an embodiment of the present invention;
FIG. 2 is a schematic flowchart of another embodiment of a payment authentication method for a mobile terminal according to an embodiment of the present invention;
FIG. 3 is a schematic diagram of interaction between a mobile terminal and a POS of another embodiment of a payment authentication method for a mobile terminal according to an embodiment of the present invention;
FIG. 4 is a schematic flowchart of another embodiment of a payment authentication method for a mobile terminal according to an embodiment of the present invention;
FIG. 5 is a schematic flowchart of another embodiment of a payment authentication method for a mobile terminal according to an embodiment of the present invention;
FIG. 6 is a schematic flowchart of another embodiment of a payment authentication method for a mobile terminal according to an embodiment of the present invention;
FIG. 7 is a schematic structural diagram of a payment authentication apparatus according to an embodiment of the present invention;
FIG. 8 is a schematic structural diagram of another payment authentication apparatus according to an embodiment of the present invention;
FIG. 9 is a schematic structural diagram of a mobile terminal according to an embodiment of the present invention;
FIG. 10 is a schematic structural diagram of another mobile terminal according to an embodiment of the present invention; and
FIG. 11 is a schematic structural diagram of another mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "a", "b", "c", "d", and so on are intended to distinguish between different objects but do not indicate a particular order. In addition, the terms "include", "comprise", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The embodiments of the present invention provide a payment authentication method and apparatus for a mobile terminal, and a mobile terminal, so that security of payment authentication can be improved.

The mobile terminal used in the embodiments of the present invention may be, for example, a mobile phone, a tablet computer, a notebook computer, a palmtop computer, a mobile internet device (MID, mobile internet device), a wearable device (for example, a smart watch (such as an iwatch), a smart band, and a pedometer), or another terminal device that may perform mobile payment.

The embodiments of the present invention may be applied to offline payment. For example, card swiping payment is performed on a POS by simulating a mobile terminal as a bankcard by using a built-in NFC apparatus of the mobile terminal. The mobile terminal may separately perform a corresponding operation in a trusted execution environment (TEE, Trusted Execution Environment) or a rich execution environment (REE, Rich Execution Environment) in a payment authentication process. The TEE is a concept defined by a GlobalPlatform international standard organization (Global Platform), and is a secure area that resides in a main processor of a connected device, so as to ensure storage, processing, and protection of sensitive data in the trusted execution environment. The trusted execution environment is a trusted operating system that has a secure processing capability and provides a secure peripheral operation, and execution environments on a same device are isolated from each other and may run independently. The mobile terminal may execute an operation such as content encryption/decryption, key storage/access, or user identity authentication in the trusted execution environment, the key may not be leaked, and the operation may not be monitored or hijacked. In the embodiments of the present invention, a first execution environment and a third execution environment refer to the rich execution environment, and a second execution environment and a fourth execution environment refer to the trusted execution environment.

A secure element (SE, Secure Element) is an electronic component having a tamper-resistant function, and may be installed on a terminal to provide an application installed on the secure element with a secure and confidential environment for data storage and execution. The secure element includes software and tamper-resistant hardware, has a limited processing capability and no peripheral, and supports high level security. For example, a SIM card, a financial IC card, and an intelligent SD card may be running together with the TEE. Broadly speaking, every hardware device that provides storage space for installing an application and has a function of managing the installed application may be referred to as a secure element. For example, third-party applications may be installed on an intelligent terminal on which an Android (Android) system is installed, and the Android operating system may manage the third-party applications and provide specific protection. Therefore, the intelligent terminal may be referred to as a secure element in a broad sense. The secure element has different definitions and use in different specifications. For example, in a series of GlobalPlatform (Global Platform) specifications, the SE is defined and used. However, in a series of NFC Forum (NFC Forum) specifications, an NFC execution environment (NFCEE, NFC Execution Environment) instead of the SE is used. It should be noted that, in the solutions of the embodiments of the present invention, these two terms are equivalent in terms of meanings.

An NFC controller (NFCC, NFC Controller) is a logical entity that is responsible for sending data to an NFC radio frequency interface, and is often used to refer to a chip that implements this function. An interface on one end of the NFC controller is connected to an NFC antenna, and another end is connected to a device processor such as a CPU (DH), and various NFC execution environments.

An exclusive secure element (XSE, eXclusive Secure Element) is a type of secure element. After the exclusive secure element is installed on a terminal, applications on other secure elements installed on the terminal are all disabled and are inaccessible to an external device, and only an application on the exclusive secure element can communicate with a remote NFC device. Generally, the exclusive secure element is a pluggable secure element. If an embedded secure element (ESE, Embedded SE) is an exclusive secure element, another secure element cannot be installed on the terminal, and the terminal is a terminal of a single secure element.

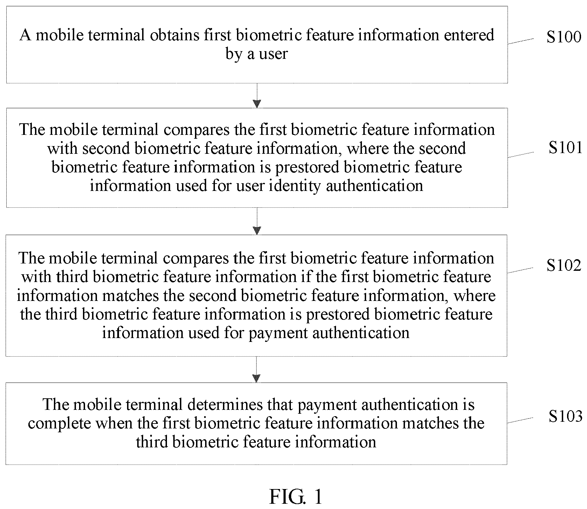

Referring to FIG. 1, FIG. 1 is a schematic flowchart of an embodiment of a payment authentication method for a mobile terminal according to an embodiment of the present invention.

As shown in FIG. 1, an embodiment of a payment authentication method for a mobile terminal according to an embodiment of the present invention may include the following steps.

S 100. A mobile terminal obtains first biometric feature information entered by a user.

In specific implementation, the mobile terminal may obtain the first biometric feature information in a rich execution environment when the mobile terminal receives, in the rich execution environment, a payment instruction entered by the user.

In a manner that may be implemented, the first biometric feature information may be biometric feature information such as a fingerprint, an iris, a facial feature, or a gesture. This is not limited in this embodiment of the present invention.

S101. The mobile terminal compares the first biometric feature information with second biometric feature information, where the second biometric feature information is prestored biometric feature information used for user identity authentication.

In specific implementation, the mobile terminal prestores the second biometric feature information used for user identify authentication, and compares the first biometric feature information with the second biometric feature information in the rich execution environment, so as to determine whether the user to which the first biometric feature information belongs is an owner.

S102. The mobile terminal compares the first biometric feature information with third biometric feature information if the first biometric feature information matches the second biometric feature information, where the third biometric feature information is prestored biometric feature information used for payment authentication.

In specific implementation, when the mobile terminal determines that the obtained first biometric feature information matches the second feature information, the mobile terminal obtains the third biometric feature information, and compares the first biometric feature information with the third biometric feature information in a trusted execution environment, to determine whether the first biometric feature information matches the third biometric feature information. The third biometric feature information is the prestored biometric feature information used for payment authentication, and is used to perform payment authentication on the first biometric feature information.

In a manner that may be implemented, the second biometric feature information and the third biometric feature information may be same biometric feature information, or may be different biometric feature information.

S103. The mobile terminal determines that payment authentication is complete when the first biometric feature information matches the third biometric feature information.

In specific implementation, when the mobile terminal determines that the first biometric feature information matches the third biometric feature information, a payment authentication operation of the mobile terminal is complete, and a payment function of the mobile terminal is driven to implement mobile payment.

In this embodiment of the present invention, a mobile terminal obtains first biometric feature information entered by a user; the mobile terminal compares the first biometric feature information with second biometric feature information, where the second biometric feature information is prestored biometric feature information used for user identity authentication; the mobile terminal compares the first biometric feature information with third biometric feature information if the first biometric feature information matches the second biometric feature information, where the third biometric feature information is prestored biometric feature information used for payment authentication; and the mobile terminal determines that payment authentication is complete when the first biometric feature information matches the third biometric feature information. The obtained first biometric feature information may be directly used to perform user identify authentication before payment, and after the authentication succeeds, it is determined, by comparison with the third biometric feature information used for payment authentication, that the obtained first biometric feature information passes the payment authentication. Therefore, security of the payment authentication is improved.

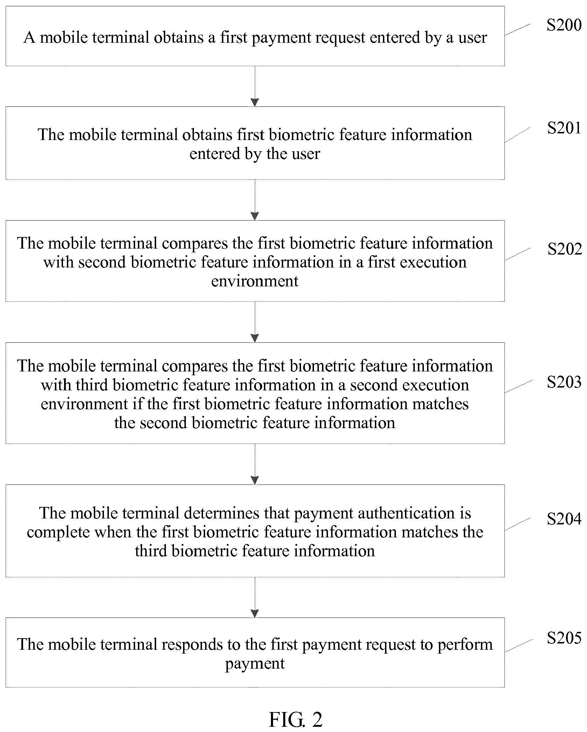

Referring to FIG. 2, FIG. 2 is a schematic flowchart of another embodiment of a payment authentication method according to an embodiment of the present invention. A first execution environment used in this embodiment of the present invention refers to a rich execution environment, and a second execution environment refers to a trusted execution environment, where a security level of the second execution environment is higher than a security level of the first execution environment.

As shown in FIG. 2, another embodiment of a payment authentication method according to an embodiment of the present invention may include the following steps.

S200. The mobile terminal obtains a first payment request entered by a user.

In specific implementation, the mobile terminal may receive the first payment request entered by the user, so as to perform a payment authentication operation according to the first payment request.

S201. The mobile terminal obtains first biometric feature information entered by the user.

In specific implementation, when the mobile terminal receives, in the rich execution environment, the first payment request entered by the user, the mobile terminal may display a prompt of entering biometric feature information, and obtain the first biometric feature information in the rich execution environment.

In a manner that may be implemented, the first biometric feature information may be biometric feature information such as a fingerprint, an iris, a facial feature, or a gesture. This is not limited in this embodiment of the present invention.

S202. The mobile terminal compares the first biometric feature information with the second biometric feature information in a first execution environment.

In specific implementation, fingerprint information is used as an example of the first biometric feature information of the user that is obtained by the mobile terminal. The mobile terminal may obtain A fingerprint information, B fingerprint information, C fingerprint information, and D fingerprint information of the user. The four types of fingerprint information are set to the second biometric feature information according to a specified instruction of the user, and the second biometric feature information is stored. The second biometric feature information is used as biometric feature information for user identity authentication, so as to determine whether the user is an owner.

If the mobile terminal obtains the first biometric feature information of the user, the mobile terminal compares the first biometric feature information with the prestored second biometric feature information in the rich execution environment, and authentication succeeds if the mobile terminal determines that the first biometric feature information matches the second biometric feature information.

For example, if the mobile terminal obtains the B fingerprint information, regardless of whether the B fingerprint information is biometric feature information used for payment authentication, the authentication is considered to be successful when the B fingerprint information matches the second biometric feature information, and a first payment apparatus is waited for further verifying whether the B fingerprint information is the biometric feature information used for payment authentication.

In a manner that may be implemented, the second biometric feature information used for user identity authentication may be third biometric feature information, where the third biometric feature information is prestored biometric feature information used for payment authentication. Specifically, after the mobile terminal obtains the A fingerprint information, the B fingerprint information, the C fingerprint information, and the D fingerprint information of the user, the first payment apparatus may set, according to a selection instruction of the user, one piece of fingerprint information (such as the A fingerprint information) to the biometric feature information used for user identify authentication (that is, the second biometric feature information, and the second biometric feature information and the third biometric feature information are same biometric feature information). The mobile terminal may delete remaining fingerprint information stored for user identity authentication, and only the A fingerprint information is retained as a comparison object. After obtaining fingerprint information of the user, the mobile terminal compares the obtained fingerprint information of the user with the A fingerprint information in the rich execution environment. When a comparison result is that the obtained fingerprint information of the user matches the A fingerprint information, user identity authentication is considered to be successful, and it is further verified whether the fingerprint information of the user is the biometric feature information used for payment authentication.

S203. The mobile terminal compares the first biometric feature information with the third biometric feature information in a second execution environment if the first biometric feature information matches the second biometric feature information.

In specific implementation, the mobile terminal may set one piece of effective biometric feature information (for example, the A fingerprint information) to the third biometric feature information according to a selection instruction of the user, where the third biometric feature information is the prestored biometric feature information used for payment authentication. When the mobile terminal determines, in the rich execution environment, that the first biometric feature information matches the second biometric feature information used for user identity authentication, the mobile terminal obtains the prestored A fingerprint information in the trusted execution environment, and compares, in the trusted execution environment, the A fingerprint information with the first biometric feature information that successfully passes the user identity authentication. Payment authentication fails if the first biometric feature information is the B fingerprint information, or payment authentication succeeds if the first biometric feature information is the A fingerprint information.

S204. The mobile terminal determines that payment authentication is complete when the first biometric feature information matches the third biometric feature information.

In specific implementation, a payment authentication operation of the mobile terminal is complete when the mobile terminal determines that the first biometric feature information matches the third biometric feature information.

S205. The mobile terminal responds to the first payment request to perform payment.

In specific implementation, when completing the payment authentication on the first biometric feature information, the mobile terminal responds to the first payment request entered by the user, and completes a payment operation by using a near field communication NFC apparatus.

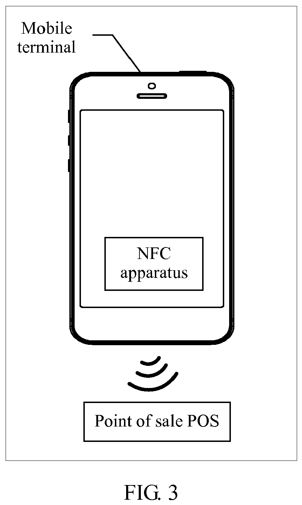

In a manner that may be implemented, as shown in FIG. 3, a payment manner of a mobile terminal may be that the mobile terminal performs payment by using the NFC apparatus and a point of sale POS. A process in which the mobile terminal performs the payment by using the NFC apparatus and the POS is the prior art, and details are not described in this embodiment.

In this embodiment of the present invention, obtained first biometric feature information may be directly used to perform user identify authentication before payment, and after the authentication succeeds, it is determined, by comparison with third biometric feature information used for payment authentication, that the obtained first biometric feature information passes payment authentication. The payment is performed by using an NFC apparatus and a POS after the authentication. Therefore, security of the payment authentication is improved.

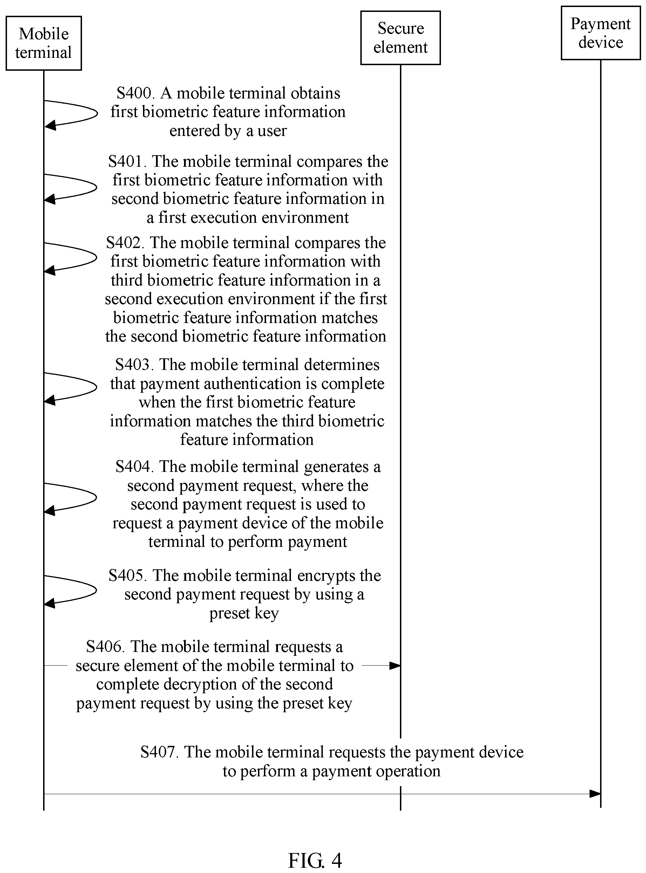

Referring to FIG. 4, FIG. 4 is a schematic flowchart of another embodiment of a payment authentication method according to an embodiment of the present invention. A first execution environment used in this embodiment of the present invention refers to a rich execution environment, and a second execution environment refers to a trusted execution environment, where a security level of the second execution environment is higher than a security level of the first execution environment.

As shown in FIG. 4, another embodiment of a payment authentication method according to an embodiment of the present invention may include the following steps.

S400. A mobile terminal obtains first biometric feature information entered by a user.

S401. The mobile terminal compares the first biometric feature information with the second biometric feature information in a first execution environment.

S402. The mobile terminal compares the first biometric feature information with the third biometric feature information in a second execution environment if the first biometric feature information matches the second biometric feature information.

S403. The mobile terminal determines that payment authentication is complete when the first biometric feature information matches the third biometric feature information.

In specific implementation, for details about step S400 to step S403 in this embodiment, refer to step S201 to step S204 in the embodiment of FIG. 2, and the details are not described in this embodiment.

S404. The mobile terminal generates a second payment request, where the second payment request is used to request a payment device of the mobile terminal to perform payment.

In specific implementation, when the mobile terminal determines that the first biometric feature information is the same as the third biometric feature information, the mobile terminal determines that the payment authentication is complete, and generates the second payment request in the trusted execution environment, to request the payment device to perform the payment, where the payment device is an NFC apparatus.

S405. The mobile terminal encrypts the second payment request by using a preset key.

In specific implementation, a key used for encryption/decryption may be preset before the mobile terminal and a secure element in the mobile terminal perform the payment authentication. After generating the second payment request, the mobile terminal obtains the preset key, and encrypts the second payment request by using the preset key.

S406. The mobile terminal requests a secure element of the mobile terminal to complete decryption of the second payment request by using the preset key.

In specific implementation, the mobile terminal sends the second payment request to the secure element in the trusted execution environment, and after receiving, in the trusted execution environment, the second payment request sent by the mobile terminal, the secure element decrypts the second payment request by using a key that is negotiated with the mobile terminal.

S407. The mobile terminal requests the payment device to perform a payment operation.

In specific implementation, if the decryption succeeds, the mobile terminal requests, in the trusted execution environment, the payment device to perform the payment operation. The mobile terminal completes the payment operation by using the near field communication NFC apparatus.

In a manner that may be implemented, the mobile terminal may further send the second payment request to an embedded secure element in the trusted execution environment by using a preset dedicated channel, so as to ensure security of interaction between the mobile terminal and the embedded secure element.

In a manner that may be implemented, the mobile terminal may send the second payment request to the secure element in a form of an electronic signal, or may request, in a form of an electronic signal, the NFC apparatus to complete the payment operation.

In this embodiment of the present invention, obtained first biometric feature information may be directly used to perform user identify authentication before payment. After the authentication succeeds, it is determined, by comparison with third biometric feature information used for payment authentication, that the obtained first biometric feature information passes payment authentication. A secure element is further requested to perform authentication after the authentication. Finally, the payment is performed by using an NFC apparatus and a POS. Therefore, security of the payment authentication is improved.

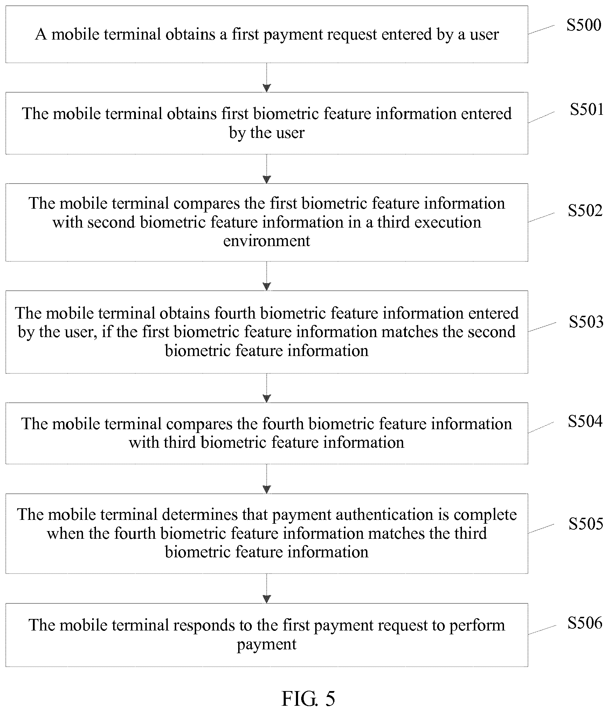

Referring to FIG. 5, FIG. 5 is a schematic flowchart of another embodiment of a payment authentication method for a mobile terminal according to an embodiment of the present invention. A third execution environment used in this embodiment of the present invention refers to a rich execution environment, and a fourth execution environment refers to a trusted execution environment, where a security level of the fourth execution environment is higher than a security level of the third execution environment. In this embodiment of the present invention, based on success of user identity authentication that is performed on first feature information in the embodiment of FIG. 1 to the embodiment of FIG. 3, fourth biometric feature information is further added to perform payment authentication, and details are described below.

As shown in FIG. 5, another embodiment of a payment authentication method according to an embodiment of the present invention may include the following steps.

S500. The mobile terminal obtains a first payment request entered by a user.

S501. The mobile terminal obtains first biometric feature information entered by the user.

In specific implementation, for details about step S500 and step S501 in this embodiment, refer to step S200 and step S201 in the embodiment of FIG. 2, and the details are not described in this embodiment.

S502. The mobile terminal compares the first biometric feature information with the second biometric feature information in a third execution environment.

In specific implementation, the third execution environment refers to the rich execution environment, and fingerprint information is used as an example of the first biometric feature information of the user that is obtained by the mobile terminal. The mobile terminal may obtain A fingerprint information, B fingerprint information, C fingerprint information, and D fingerprint information of the user. The four types of fingerprint information are set to the second biometric feature information according to a specified instruction of the user, and the second biometric feature information is stored. The second biometric feature information is used as biometric feature information for user identity authentication, so as to determine whether the user is an owner. If the mobile terminal obtains the first biometric feature information of the user, the mobile terminal compares the first biometric feature information with the prestored second biometric feature information in the rich execution environment, and authentication succeeds if the mobile terminal determines that the first biometric feature information matches the second biometric feature information. For example, if the mobile terminal obtains the B fingerprint information, regardless of whether the B fingerprint information is biometric feature information used for payment authentication, the authentication is considered to be successful when the B fingerprint information matches the second biometric feature information, and a first payment apparatus is waited for further verifying whether the B fingerprint information is the biometric feature information used for payment authentication.

In a manner that may be implemented, the second biometric feature information used for user identity authentication may be third biometric feature information, where the third biometric feature information is prestored biometric feature information used for payment authentication. Specifically, after the mobile terminal obtains the A fingerprint information, the B fingerprint information, the C fingerprint information, and the D fingerprint information of the user, the first payment apparatus may set, according to a selection instruction of the user, one piece of fingerprint information (such as the A fingerprint information) to the biometric feature information used for user identify authentication (that is, the second biometric feature information, and the second biometric feature information and the third biometric feature information are same biometric feature information). The mobile terminal may delete remaining fingerprint information stored for user identity authentication, and only the A fingerprint information is retained as a comparison object. After obtaining fingerprint information of the user, the mobile terminal compares the obtained fingerprint information of the user with the A fingerprint information in the rich execution environment. When a comparison result is that the obtained fingerprint information of the user matches the A fingerprint information, user identity authentication is considered to be successful, and it is further verified whether the fingerprint information of the user is the biometric feature information used for payment authentication.

S503. The mobile terminal obtains fourth biometric feature information entered by the user, if the first biometric feature information matches the second biometric feature information.

In specific implementation, when the mobile terminal determines, in the rich execution environment, that the first biometric feature information matches the second biometric feature information used for user identity authentication, the mobile terminal may prompt the user again to enter the fourth biometric feature information, so as to perform the payment authentication on the fourth biometric feature information.

In a manner that may be implemented, the fourth biometric feature information may be biometric feature information such as a fingerprint, an iris, a facial feature, or a gesture. This is not limited in this embodiment of the present invention. For example, the fourth biometric feature information may be iris information, and when the mobile terminal determines, in the rich execution environment, that the first biometric feature information matches the second biometric feature information, the mobile terminal obtains the iris information entered by the user, and performs the payment authentication on the obtained iris information.

S504. The mobile terminal compares the fourth biometric feature information with the third biometric feature information.

In specific implementation, the mobile terminal compares the fourth biometric feature information with the third biometric feature information in a fourth execution environment, where a security level of the fourth execution environment is higher than a security level of the third execution environment. The fourth execution environment refers to the trusted execution environment. Specifically, the mobile terminal may set a iris information to the third biometric feature information according to a selection instruction of the user, where the third biometric feature information is the prestored biometric feature information used for payment authentication. Therefore, the mobile terminal compares, in the trusted execution environment, the iris information entered by the user with the a iris information used for payment authentication.

S505. The mobile terminal determines that the payment authentication is complete when the fourth biometric feature information matches the third biometric feature information.

In specific implementation, the mobile terminal determines that the payment authentication is complete if the mobile terminal determines that the iris information entered by the user matches the a iris information used for payment authentication.

S506. The mobile terminal responds to the first payment request to perform payment.

In specific implementation, when completing the payment authentication on the iris information (that is, the fourth biometric feature information) entered by the user, the mobile terminal responds to the first payment request entered by the user, and completes a payment operation by using a near field communication NFC apparatus.

In this embodiment of the present invention, obtained first biometric feature information may be directly used to perform user identify authentication before payment. After the user identity authentication succeeds, fourth biometric feature information is obtained, and it is determined, by comparison with third biometric feature information used for payment authentication, that the obtained fourth biometric feature information passes payment authentication. The payment is performed by using an NFC apparatus and a POS after the authentication. Therefore, security of the payment authentication is improved.

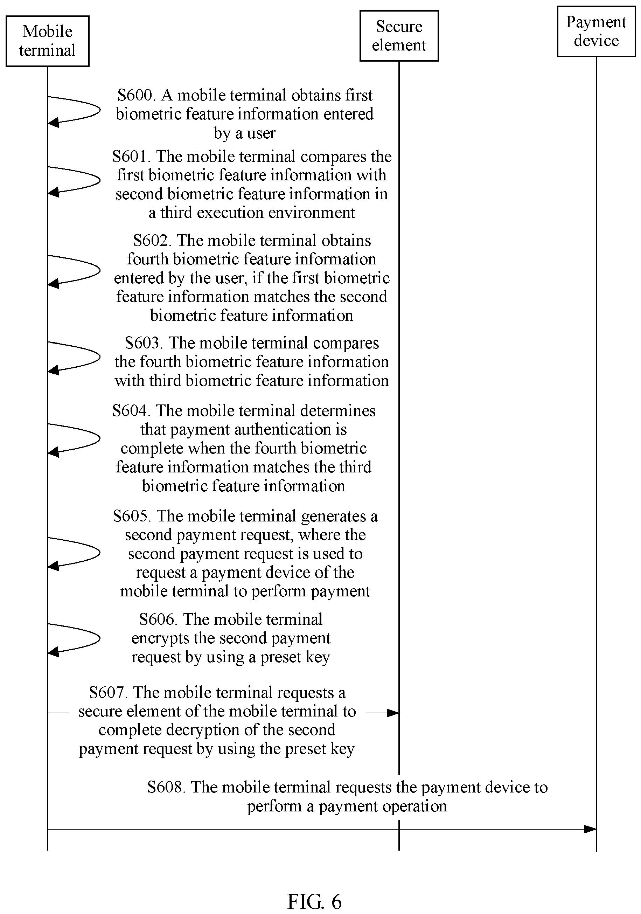

Referring to FIG. 6, FIG. 6 is a schematic flowchart of another embodiment of a payment authentication method for a mobile terminal according to an embodiment of the present invention. A third execution environment used in this embodiment of the present invention refers to a rich execution environment, and a fourth execution environment refers to a trusted execution environment, where a security level of the fourth execution environment is higher than a security level of the third execution environment. In this embodiment of the present invention, based on success of user identity authentication that is performed on first feature information in the embodiment of FIG. 1 to the embodiment of FIG. 3, fourth biometric feature information is further added to perform payment authentication, and details are described below.

As shown in FIG. 6, another embodiment of a payment authentication method according to an embodiment of the present invention may include the following steps.

S600. A mobile terminal obtains first biometric feature information entered by a user.

S601. The mobile terminal compares the first biometric feature information with the second biometric feature information in a third execution environment.

S602. The mobile terminal obtains fourth biometric feature information entered by the user, if the first biometric feature information matches the second biometric feature information.

S603. The mobile terminal compares the fourth biometric feature information with the third biometric feature information.

S604. The mobile terminal determines that the payment authentication is complete when the fourth biometric feature information matches the third biometric feature information.

In specific implementation, for details about step S600 to step S604 in this embodiment, refer to step S501 to step S505 in the embodiment of FIG. 5, and the details are not described in this embodiment.

S605. The mobile terminal generates a second payment request, where the second payment request is used to request a payment device of the mobile terminal to perform payment.

In specific implementation, when the mobile terminal determines that the fourth biometric feature information is the same as the third biometric feature information, the mobile terminal determines that the payment authentication is complete, and generates the second payment request in the trusted execution environment, to request the payment device to perform the payment, where the payment device is an NFC apparatus.

S606. The mobile terminal encrypts the second payment request by using a preset key.

In specific implementation, a key used for encryption/decryption may be preset before the mobile terminal and a secure element in the mobile terminal perform the payment authentication. After generating the second payment request, the mobile terminal obtains the preset key, and encrypts the second payment request by using the preset key.

S607. The mobile terminal requests a secure element of the mobile terminal to complete decryption of the second payment request by using the preset key.

In specific implementation, the mobile terminal sends the second payment request to the secure element in the trusted execution environment, and after receiving, in the trusted execution environment, the second payment request sent by the mobile terminal, the secure element decrypts the second payment request by using a key that is negotiated with the mobile terminal.

S608. The mobile terminal requests the payment device to perform a payment operation.

In specific implementation, if the decryption succeeds, the mobile terminal requests, in the trusted execution environment, the payment device to perform the payment operation. The mobile terminal completes the payment operation by using the near field communication NFC apparatus.

In a manner that may be implemented, the mobile terminal may further send the second payment request to an embedded secure element in the trusted execution environment by using a preset dedicated channel, so as to ensure security of interaction between the mobile terminal and the embedded secure element.

In a manner that may be implemented, the mobile terminal may send the second payment request to the secure element in a form of an electronic signal, or may request, in a form of an electronic signal, the NFC apparatus to complete the payment operation.

In this embodiment of the present invention, obtained first biometric feature information may be directly used to perform user identify authentication before payment. After the user identity authentication succeeds, fourth biometric feature information is obtained, and it is determined, by comparison with third biometric feature information used for payment authentication, that the obtained fourth biometric feature information passes payment authentication. A secure element is further requested to perform authentication after the authentication. Finally, the payment is performed by using an NFC apparatus and a POS. Therefore, security of the payment authentication is improved.

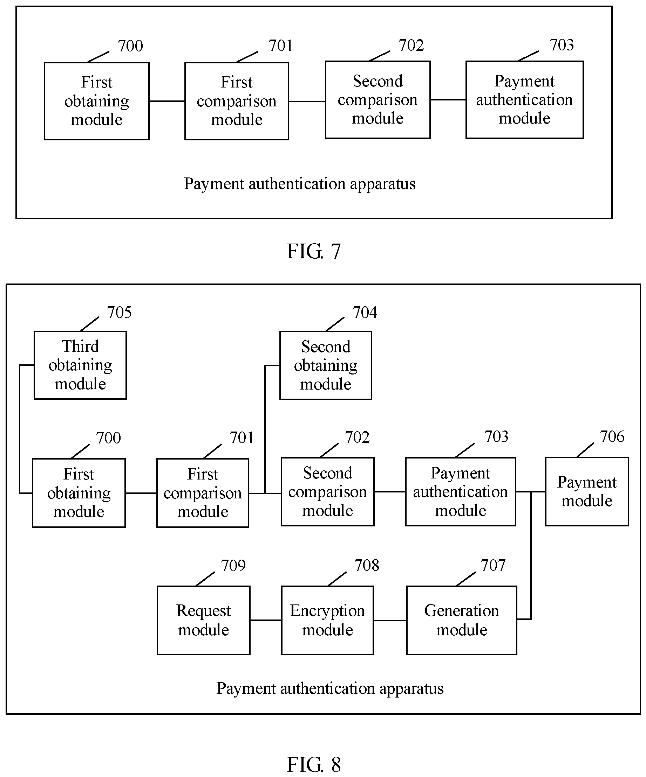

Referring to FIG. 7, FIG. 7 is a schematic structural diagram of a payment authentication apparatus according to an embodiment of the present invention. For details about specific steps implemented by each module in this embodiment of the present invention, refer to the embodiments of FIG. 1 to FIG. 6, and the details are not described in this embodiment of the present invention. The payment authentication apparatus shown in FIG. 7 includes a first obtaining module 700, a first comparison module 701, a second comparison module 702, and a payment authentication module 703.

The first obtaining module 700 is configured to obtain first biometric feature information entered by a user.

The first comparison module 701 is configured to compare the first biometric feature information with second biometric feature information, where the second biometric feature information is prestored biometric feature information used for user identity authentication.

The second comparison module 702 is configured to compare the first biometric feature information with third biometric feature information if a comparison result of the first comparison module 701 is that the first biometric feature information matches the second biometric feature information, where the third biometric feature information is prestored biometric feature information used for payment authentication.

The payment authentication module 703 is configured to determine that payment authentication is complete when a comparison result of the second comparison module 702 is that the first biometric feature information matches the third biometric feature information.

In specific implementation, the payment authentication apparatus may obtain the first biometric feature information in a rich execution environment when the payment authentication apparatus receives, in the rich execution environment, a payment instruction entered by the user.

In a manner that may be implemented, the first biometric feature information may be biometric feature information such as a fingerprint, an iris, a facial feature, or a gesture. This is not limited in this embodiment of the present invention.

In specific implementation, the payment authentication apparatus prestores the second biometric feature information used for user identify authentication, and compares the first biometric feature information with the second biometric feature information in the rich execution environment, so as to determine whether the user to which the first biometric feature information belongs is an owner.

In specific implementation, when the payment authentication apparatus determines that the obtained first biometric feature information matches the second feature information, the payment authentication apparatus obtains the third biometric feature information, and compares the first biometric feature information with the third biometric feature information in a trusted execution environment, to determine whether the first biometric feature information matches the third biometric feature information. The third biometric feature information is the prestored biometric feature information used for payment authentication, and is used to perform payment authentication on the first biometric feature information.

In a manner that may be implemented, the second biometric feature information and the third biometric feature information may be same biometric feature information, or may be different biometric feature information.

In specific implementation, when the payment authentication apparatus determines that the first biometric feature information matches the third biometric feature information, a payment authentication operation of the payment authentication apparatus is complete, and a payment function of the payment authentication apparatus is driven to implement mobile payment.

In a manner that may be implemented, the first comparison module 701 is specifically configured to:
compare the first biometric feature information with the second biometric feature information in a first execution environment.

The second comparison module 702 is specifically configured to:
compare the first biometric feature information with the third biometric feature information in a second execution environment, where a security level of the second execution environment is higher than a security level of the first execution environment.

In a manner that may be implemented, as shown in FIG. 8, the payment authentication apparatus further includes a second obtaining module 704.

The second obtaining module 704 is configured to obtain fourth biometric feature information entered by the user, if the comparison result of the first comparison module 701 is that the first biometric feature information matches the second biometric feature information.

The second comparison module 702 is specifically configured to:
compare the fourth biometric feature information with the third biometric feature information.

The payment authentication module 703 is specifically configured to:
determine that the payment authentication is complete when the fourth biometric feature information matches the third biometric feature information.

In a manner that may be implemented, the first comparison module 701 is specifically configured to:
compare the first biometric feature information with the second biometric feature information in a third execution environment.

The second comparison module 702 is specifically configured to:
compare the fourth biometric feature information with the third biometric feature information in a fourth execution environment, where a security level of the fourth execution environment is higher than a security level of the third execution environment.

In a manner that may be implemented, as shown in FIG. 8, the payment authentication apparatus further includes a third obtaining module 705 and a payment module 706.

The third obtaining module 705 is configured to obtain a first payment request entered by the user.

The payment module 706 is configured to respond to the first payment request to perform payment.

In a manner that may be implemented, as shown in FIG. 8, the payment authentication apparatus further includes a generation module 707, an encryption module 708, and a request module 709.

The generation module 707 is configured to generate a second payment request, where the second payment request is used to request a payment device of the payment authentication apparatus to perform payment.

The encryption module 708 is configured to encrypt the second payment request by using a preset key.

The request module 709 is configured to request the payment device to perform a payment operation after requesting a secure element of the payment authentication apparatus to complete decryption of the second payment request by using the preset key.

In a manner that may be implemented, the payment authentication apparatus completes the payment operation by using a near field communication NFC apparatus.

In this embodiment of the present invention, obtained first biometric feature information may be directly used to perform user identify authentication before payment. After the authentication succeeds, it is determined, by comparison with third biometric feature information used for payment authentication, that the obtained first biometric feature information passes payment authentication. Therefore, security of the payment authentication is improved.

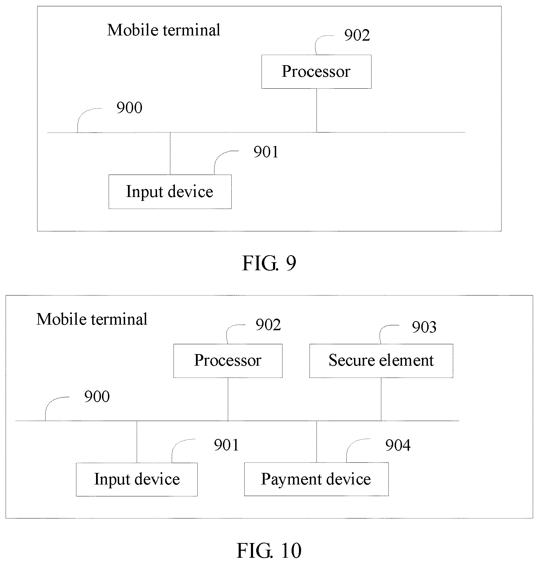

Referring to FIG. 9, FIG. 9 is a schematic structural diagram of a mobile terminal according to an embodiment of the present invention. For details about specific steps implemented by each apparatus in this embodiment of the present invention, refer to the embodiments of FIG. 1 to FIG. 6, and the details are not described in this embodiment of the present invention. As shown in FIG. 9, the mobile terminal of this embodiment includes a communications bus 900, an input device 901, and a processor 902 (there may be one or more processors 902 of the mobile terminal, and one processor is used as an example in FIG. 9).

The communications bus 900 is configured to implement connection and communication between the input device 901 and the processor 902.

The input device 901 is configured to obtain first biometric feature information entered by a user.

The processor 902 is configured to: compare the first biometric feature information with second biometric feature information, compare the first biometric feature information with third biometric feature information if the first biometric feature information matches the second biometric feature information, and determine that payment authentication is complete when the first biometric feature information matches the third biometric feature information, where the second biometric feature information is prestored biometric feature information used for user identity authentication, and the third biometric feature information is prestored biometric feature information used for payment authentication.

In specific implementation, the mobile terminal may obtain the first biometric feature information in a rich execution environment when the mobile terminal receives, in the rich execution environment, a payment instruction entered by the user.

In a manner that may be implemented, the first biometric feature information may be biometric feature information such as a fingerprint, an iris, a facial feature, or a gesture. This is not limited in this embodiment of the present invention.

In specific implementation, the mobile terminal prestores the second biometric feature information used for user identify authentication, and compares the first biometric feature information with the second biometric feature information in the rich execution environment, so as to determine whether the user to which the first biometric feature information belongs is an owner.

In specific implementation, when the mobile terminal determines that the obtained first biometric feature information matches the second feature information, the mobile terminal obtains the third biometric feature information, and compares the first biometric feature information with the third biometric feature information in a trusted execution environment, to determine whether the first biometric feature information matches the third biometric feature information. The third biometric feature information is the prestored biometric feature information used for payment authentication, and is used to perform payment authentication on the first biometric feature information.

In a manner that may be implemented, the second biometric feature information and the third biometric feature information may be same biometric feature information, or may be different biometric feature information.

In specific implementation, when the mobile terminal determines that the first biometric feature information matches the third biometric feature information, a payment authentication operation of the mobile terminal is complete, and a payment function of the mobile terminal is driven to implement mobile payment.

In a manner that may be implemented, that the processor 902 compares the first biometric feature information with second biometric feature information specifically performs the following step:
comparing the first biometric feature information with the second biometric feature information in a first execution environment.

That the processor 902 compares the first biometric feature information with third biometric feature information specifically performs the following step:
comparing the first biometric feature information with the third biometric feature information in a second execution environment, where a security level of the second execution environment is higher than a security level of the first execution environment.

In a manner that may be implemented, the input device 901 is further configured to obtain fourth biometric feature information entered by the user, if the first biometric feature information matches the second biometric feature information.

That the processor 902 compares the first biometric feature information with third biometric feature information specifically performs the following step:
comparing the fourth biometric feature information with the third biometric feature information.

That the processor 902 determines that payment authentication is complete when the first biometric feature information matches the third biometric feature information specifically performs the following step:
determining that the payment authentication is complete when the fourth biometric feature information matches the third biometric feature information.

In a manner that may be implemented, that the processor 902 compares the first biometric feature information with second biometric feature information specifically performs the following step:
comparing the first biometric feature information with the second biometric feature information in a third execution environment.

That the processor 902 compares the fourth biometric feature information with the third biometric feature information specifically performs the following step:
comparing the fourth biometric feature information with the third biometric feature information in a fourth execution environment, where a security level of the fourth execution environment is higher than a security level of the third execution environment.

In a manner that may be implemented, the input device 901 is further configured to obtain a first payment request entered by the user.

The mobile terminal further includes a payment device, and the payment device is configured to: after the processor 902 determines that the payment authentication is complete, respond to the first payment request to perform payment. Optionally, the payment device is an apparatus that is installed on the mobile terminal and used for performing payment, for example, an NFC apparatus.

In a manner that may be implemented, as shown in FIG. 10, the mobile terminal further includes a secure element 903 and a payment device 904, and the processor 902 is further configured to:
generate a second payment request after determining that the payment authentication is complete, where the second payment request is used to request the payment device 903 to perform payment; and
encrypt the second payment request by using a preset key.

The secure element 903 is configured to complete decryption of the second payment request by using the preset key.

The payment device 904 is configured to perform a payment operation after the secure element 903 completes the decryption of the second payment request.

In a manner that may be implemented, the payment device 904 is a near field communication NFC apparatus.

In this embodiment of the present invention, obtained first biometric feature information may be directly used to perform user identify authentication before payment. After the authentication succeeds, it is determined, by comparison with third biometric feature information used for payment authentication, that the obtained first biometric feature information passes payment authentication. Therefore, security of the payment authentication is improved.

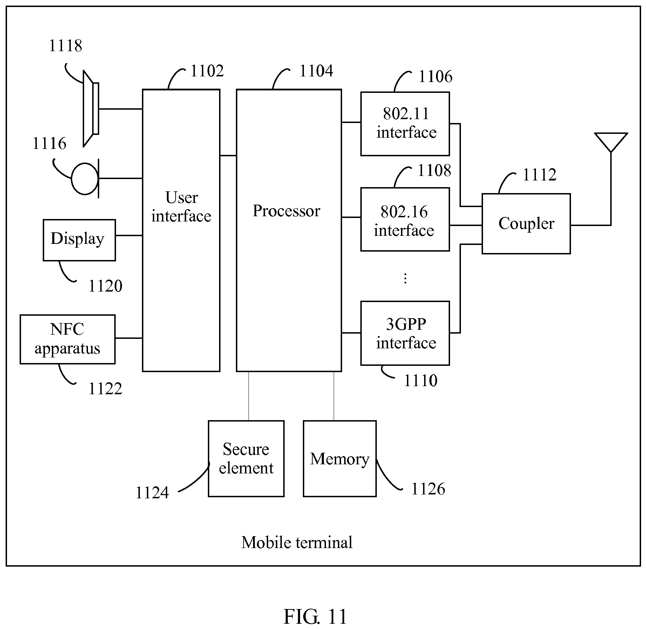

Referring to FIG. 11, FIG. 9 is a schematic structural diagram of another mobile terminal according to an embodiment of the present invention. The mobile terminal of FIG. 11 includes a user interface 1102, a processor 1104, an 802.11 interface 1106, an 802.16 interface 1108, a 3GPP interface 1110, a coupler 1112, a microphone 1116, a loudspeaker 1118, a display 1120, an NFC apparatus 1122, a secure element 1124, and a memory 1126. For details about specific steps implemented by each apparatus in this embodiment of the present invention, refer to the embodiments of FIG. 1 to FIG. 6, and the details are not described in this embodiment of the present invention.

With descriptions of the foregoing implementation manners, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

What is disclosed above is merely examples of embodiments of the present invention, and certainly is not intended to limit the protection scope of the present invention. Therefore, equivalent variations made in accordance with the claims of the present invention shall fall within the scope of the present invention.

## Claims

1. A payment authentication method for a mobile terminal, comprising:
obtaining, by a mobile terminal, first biometric feature information entered by a user;
comparing, by the mobile terminal, the first biometric feature information with second biometric feature information, wherein the second biometric feature information is prestored biometric feature information used for user identity authentication;
comparing, by the mobile terminal, the first biometric feature information with third biometric feature information if the first biometric feature information matches the second biometric feature information, wherein the third biometric feature information is prestored biometric feature information used for payment authentication; and
determining, by the mobile terminal, that payment authentication is complete when the first biometric feature information matches the third biometric feature information.

2. The payment authentication method according to claim 1, wherein the comparing, by the mobile terminal, the first biometric feature information with second biometric feature information comprises:
comparing, by the mobile terminal, the first biometric feature information with the second biometric feature information in a first execution environment; and
the comparing, by the mobile terminal, the first biometric feature information with third biometric feature information comprises:
comparing, by the mobile terminal, the first biometric feature information with the third biometric feature information in a second execution environment, wherein a security level of the second execution environment is higher than a security level of the first execution environment.

3. The payment authentication method according to claim 1, wherein after the comparing, by the mobile terminal, the first biometric feature information with second biometric feature information, the method further comprises:
obtaining, by the mobile terminal, fourth biometric feature information entered by the user, if the first biometric feature information matches the second biometric feature information;
the comparing, by the mobile terminal, the first biometric feature information with third biometric feature information comprises:
comparing, by the mobile terminal, the fourth biometric feature information with the third biometric feature information; and
the determining, by the mobile terminal, that payment authentication is complete when the first biometric feature information matches the third biometric feature information comprises:
determining, by the mobile terminal, that the payment authentication is complete when the fourth biometric feature information matches the third biometric feature information.

4. The payment authentication method according to claim 3, wherein the comparing, by the mobile terminal, the first biometric feature information with second biometric feature information comprises:
comparing, by the mobile terminal, the first biometric feature information with the second biometric feature information in a third execution environment; and
the comparing, by the mobile terminal, the fourth biometric feature information with the third biometric feature information comprises:
comparing, by the mobile terminal, the fourth biometric feature information with the third biometric feature information in a fourth execution environment, wherein a security level of the fourth execution environment is higher than a security level of the third execution environment.

5. The payment authentication method according to any one of claims 1 to 4, wherein before the obtaining, by a mobile terminal, first biometric feature information entered by a user, the method further comprises:
obtaining, by the mobile terminal, a first payment request entered by the user; and
after the determining, by the mobile terminal, that payment authentication is complete, the method further comprises:
responding, by the mobile terminal, to the first payment request to perform payment.

6. The payment authentication method according to any one of claims 1 to 4, wherein after the determining, by the mobile terminal, that payment authentication is complete, the method further comprises:
generating, by the mobile terminal, a second payment request, wherein the second payment request is used to request a payment device of the mobile terminal to perform payment;
encrypting, by the mobile terminal, the second payment request by using a preset key; and
requesting, by the mobile terminal, the payment device to perform a payment operation after requesting a secure element of the mobile terminal to complete decryption of the second payment request by using the preset key.

7. The payment authentication method according to claim 5 or 6, wherein the mobile terminal completes the payment operation by using a near field communication NFC apparatus.

8. A payment authentication apparatus, comprising:
a first obtaining module, configured to obtain first biometric feature information entered by a user;
a first comparison module, configured to compare the first biometric feature information with second biometric feature information, wherein the second biometric feature information is prestored biometric feature information used for user identity authentication;
a second comparison module, configured to compare the first biometric feature information with third biometric feature information if a comparison result of the first comparison module is that the first biometric feature information matches the second biometric feature information, wherein the third biometric feature information is prestored biometric feature information used for payment authentication; and
a payment authentication module, configured to determine that payment authentication is complete when a comparison result of the second comparison module is that the first biometric feature information matches the third biometric feature information.

9. The payment authentication apparatus according to claim 8, wherein the first comparison module is specifically configured to:
compare the first biometric feature information with the second biometric feature information in a first execution environment; and
the second comparison module is specifically configured to:
compare the first biometric feature information with the third biometric feature information in a second execution environment, wherein a security level of the second execution environment is higher than a security level of the first execution environment.

10. The payment authentication apparatus according to claim 8, wherein the payment authentication apparatus further comprises:
a second obtaining module, configured to obtain fourth biometric feature information entered by the user, if the comparison result of the first comparison module is that the first biometric feature information matches the second biometric feature information;
the second comparison module is specifically configured to:
compare the fourth biometric feature information with the third biometric feature information; and
the payment authentication module is specifically configured to:
determine that the payment authentication is complete when the fourth biometric feature information matches the third biometric feature information.

11. The payment authentication apparatus according to claim 10, wherein the first comparison module is specifically configured to:
compare the first biometric feature information with the second biometric feature information in a third execution environment; and
the second comparison module is specifically configured to:
compare the fourth biometric feature information with the third biometric feature information in a fourth execution environment, wherein a security level of the fourth execution environment is higher than a security level of the third execution environment.

12. The payment authentication apparatus according to any one of claims 8 to 11, wherein the payment authentication apparatus further comprises:
a third obtaining module, configured to obtain a first payment request entered by the user; and
a payment module, configured to respond to the first payment request to perform payment.

13. The payment authentication apparatus according to any one of claims 8 to 11, wherein the payment authentication apparatus further comprises:
a generation module, configured to generate a second payment request, wherein the second payment request is used to request a payment device of the payment authentication apparatus to perform payment;
an encryption module, configured to encrypt the second payment request by using a preset key; and
a request module, configured to request the payment device to perform a payment operation after requesting a secure element of the payment authentication apparatus to complete decryption of the second payment request by using the preset key.

14. The payment authentication apparatus according to claim 12 or 13, wherein the payment authentication apparatus completes the payment operation by using a near field communication NFC apparatus.

15. A mobile terminal, wherein the mobile terminal comprises a communications bus, an input device, and a processor;
the communications bus is configured to implement connection and communication between the input device and the processor;
the input device is configured to obtain first biometric feature information entered by a user; and
the processor is configured to: compare the first biometric feature information with second biometric feature information, compare the first biometric feature information with third biometric feature information if the first biometric feature information matches the second biometric feature information, and determine that payment authentication is complete when the first biometric feature information matches the third biometric feature information, wherein the second biometric feature information is prestored biometric feature information used for user identity authentication, and the third biometric feature information is prestored biometric feature information used for payment authentication.

16. The mobile terminal according to claim 15, wherein that the processor compares the first biometric feature information with second biometric feature information specifically performs the following step:
comparing the first biometric feature information with the second biometric feature information in a first execution environment; and
that the processor compares the first biometric feature information with third biometric feature information specifically performs the following step:
comparing the first biometric feature information with the third biometric feature information in a second execution environment, wherein a security level of the second execution environment is higher than a security level of the first execution environment.

17. The mobile terminal according to claim 15, wherein the input device is further configured to obtain fourth biometric feature information entered by the user, if the first biometric feature information matches the second biometric feature information;
that the processor compares the first biometric feature information with third biometric feature information specifically performs the following step:
comparing the fourth biometric feature information with the third biometric feature information; and
that the processor determines that payment authentication is complete when the first biometric feature information matches the third biometric feature information specifically performs the following step:
determining that the payment authentication is complete when the fourth biometric feature information matches the third biometric feature information.

18. The mobile terminal according to claim 17, wherein that the processor compares the first biometric feature information with second biometric feature information specifically performs the following step:
comparing the first biometric feature information with the second biometric feature information in a third execution environment; and
that the processor compares the fourth biometric feature information with the third biometric feature information specifically performs the following step:
comparing the fourth biometric feature information with the third biometric feature information in a fourth execution environment, wherein a security level of the fourth execution environment is higher than a security level of the third execution environment.

19. The mobile terminal according to any one of claims 15 to 18, wherein the input device is further configured to obtain a first payment request entered by the user; and
the mobile terminal further comprises a payment device, and the payment device is configured to: after the processor determines that the payment authentication is complete, respond to the first payment request to perform payment.

20. The mobile terminal according to any one of claims 15 to 18, wherein the mobile terminal further comprises a secure element and a payment device, and the processor is further configured to:
generate a second payment request after determining that the payment authentication is complete, wherein the second payment request is used to request the payment device to perform payment; and
encrypt the second payment request by using a preset key;
the secure element is configured to complete decryption of the second payment request by using the preset key; and
the payment device is configured to perform a payment operation after the secure element completes the decryption of the second payment request.

21. The mobile terminal according to claim 19 or 20, wherein the payment device is a near field communication NFC apparatus.
